(19) **Europäisches Patentamt**

**European Patent Office**

**Office européen des brevets**

(11) **EP 1 079 565 A2**

(12) **EUROPEAN PATENT APPLICATION**

(43) Date of publication:
28.02.2001 Bulletin 2001/09

(51) Int. Cl.⁷: **H04L 9/08**, H04L 9/32

(21) Application number: 00118449.8

(22) Date of filing: 24.08.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 25.08.1999 US 382493

(71) Applicant:
**Dew Engineering and Development Limited
Ottawa, Ontario K1G 4G2 (CA)**

(72) Inventor: **Hillhouse, Robert D.
Ottawa, Ontario K1Y 1Z9 (CA)**

(74) Representative:
**Lasch, Hartmut Dipl.-Ing.
Patentanwälte,
Dipl.-Ing. Heiner Lichti,
Dipl.-Phys.Dr. rer. nat Jost Lempert,
Dipl.-Ing. Hartmut Lasch,
Postfach 41 07 60
76207 Karlsruhe (DE)**

(54) **Method of securely establishing a secure communication link via an unsecured communication network**

(57) A method for securely establishing a secure communication link via an unsecured communication network is disclosed. User authorization information, such as biometric information, is received at a client station and encrypted upon receipt using a shared key generated at the client station using a public key provided by a server and a private key of the client. After encryption the user authorization information is transmitted together with the public key of the client to the server. Upon receipt of the public key of the client, the shared key is generated using a private key of the server and the received public key. The user authorisation information is then decrypted using the shared key. If the user of the client station is authorized, a secure communication link between the server and the client is established using the shared key for encryption/decryption.

Fig. 2

EP 1 079 565 A2

## Description

## Field of the Invention

This invention relates generally to cryptographic systems providing secure communication using an insecure communication network. More particularly, the invention relates to a method for securely establishing a secure communication link using an insecure communication network.

## Background of the Invention

Computer security is fast becoming an important issue. With the proliferation of computers and computer networks into all aspects of business and daily life - financial, medical, education, government, and communications - the concern over secure transmission of information is growing. Transmission of information via unsecured or unprotected communication channels such as the Internet risks exposing the transmitted information to electronic eavesdropping and alteration. Cryptographic communications systems provide security from unauthorized access to files by implementing encryption and cipher techniques. These techniques convert data into other corresponding data forms in a fashion that is reversible. Once encrypted, the data is unintelligible unless first decrypted. Each of these encryption techniques uses a key or cipher. Such a key is crucial to the encryption/decryption process.

Symmetric key algorithms use an identical cipher key for both encryption by a sender of a communication and decryption by a receiver of the communication. Symmetric key cryptographic systems are built on the mutual trust of the two stations sharing the cipher key to use the cryptographic system to protect against distrusted third parties. The best known symmetric key algorithm is the National Data Encryption Standard (DES) algorithm first published by the National Institute of Standards and Technology. See Federal Register, Mar. 17, 1975, Vol. 40, No. 52 and Aug. 1, 1975, Vol. 40, No. 149. The sender's cryptographic device uses the DES algorithm to encrypt the message when loaded with a cipher key - a DES cipher the key is a numerical value, for example 56 bits in length - for that session of communication. The recipient's cryptographic device uses an inverse of the DES algorithm to decrypt the encrypted message when loaded with the same cipher key as was used for encryption. However, in symmetric key cryptographic systems the sender and the recipient need to exchange the cipher key over a secure channel to which no unauthorized third party has access prior to the desired communication.

Another class of cryptographic algorithms, asymmetric key algorithms, uses different cipher keys for encryption and decryption. In a cryptographic system using an asymmetric key algorithm, a user makes the encryption key public and keeps the decryption key private. It is not feasible to derive the private decryption key from the public encryption key. Anyone who knows the public key of a particular user is able to encipher a message to that user, but only the user owning the private key corresponding to that public key is able to decrypt the message. This public/private key system was first proposed by Diffie and Hellman in "New Directions in Cryptography," IEEE Transactions on Information Theory, November 1976, and is hereby incorporated by reference.

Furthermore, Diffie and Hellman described a method of generating a secure cipher key. Using the asymmetric key algorithm, two interacting users simultaneously and independently generate a shared key to be used for symmetric encryption/decryption.

State of the art encryption techniques such as RSA, DES, and CAST arc based on asymmetric encryption, for example, the Diffie-Hellman key agreement protocol.

Unfortunately, these methods are still vulnerable to interception of the communication during exchange of keys between two stations in order to establish a secure communication by the so-called "man-in-the-middle" (MIM). A MIM intercepts a key transmitted from a first station to a second station and then sends his own public key to the second station. At the second station not knowing of the MIM's interception a message is encrypted using the MIM's key or the MIM's key is used to generate a shared encryption key. Furthermore, the MIM may intercept a key sent by the second station and send his own key to the first station instead. In this case the MIM is able decrypt a message sent from, for example, the first station, read the message and even alter the message. He then encrypts the message using his key and sends it to the second station.

In order to prevent this kind of MIM attack state of the art cryptographic systems require exchanged keys to be digitally signed by a trusted entity or key escrow for certification. In this case the MIM is not able to send his own key instead without detection. A state of the art cryptographic system requiring signing of exchanged keys is, for example, the authenticated Diffie-Hellman key agreement protocol, or Station-to-Station (STS) protocol. Other cryptographic system requiring signing of exchanged keys are disclosed in U.S. Patent 5,857,022 issued to Sudia in January 5, 1999, and in U.S. Patent 5,864,667 issued to Barkan in January 26, 1999.

Unfortunately, signing of all exchanged keys requires a key server for storage and management of all signed keys. For example, a bank communicating with its customers via the Internet needs a key escrow server for all keys of the customers in order to establish secure communication links. This may involve tens or hundreds of thousands of different users. To overcome this problem only the key sent from the bank to the customer is signed and a same key is used for all customers. Unfortunately, this allows the MIM to communicate with the bank in place of the customer.

Thus, in an attempt to overcome these limitations of the prior art, it is an object of the invention to provide a method for securely establishing a secure communication link using user authorization information.

It is a further object of the invention to provide a method for securely establishing a secure communication link using biometric information.

**Summary of the Invention**

In accordance with the invention there is provided a method for securely establishing a secure communication link between a first station and a second station of a communication network. The method comprises the steps of:

transmitting a first public key corresponding to a private key from the first station to the second station via the communication network;
receiving the first public key at the second station;
transmitting a second public key corresponding to another private key from the second station to the first station via the communication network;
receiving at the second station user authorization information from a user of the second station;
encrypting the user authorisation information using a shared electronic key determined from the first public key and the other private key wherein the shared key is also capable of being determined from the second public key and the private key;
transmitting the encrypted user authorisation information from the second station to the first station via the communication network;
receiving the second public key at the first station;
receiving the encrypted user authorization information;
decrypting the user authorization information using the shared key determined from the second public key and the private key;
authorising the user of the second station in dependence upon the decrypted user authorisation information; and,
if the user of the second station is authorised, commencing communication between the first station and the second station using the shared key for encryption/decryption.

In accordance with the invention there is also provided a method for securely establishing a secure communication link between a first station and a second station of a communication network. The method comprises the steps of:

generating a first private/public key pair at the first station;

signing the first public key;
transmitting the signed first public key from the first station to the second station via the communication network;
receiving the signed first public key at the second station;
verifying the signed first public key at the second station;
generating a second private/public key pair at the second station;
generating a shared key corresponding to the first private/public key pair and the second private/public key pair at the second station;
receiving biometric information at the second station from a user of the second station;
encrypting the biometric information using the shared key;
encrypting the second public key using the first public key;
transmitting the encrypted biometric information and the encrypted second public key from the second station to the first station via the communication network;
receiving the encrypted biometric information and the encrypted second public key at the first station;
decrypting the encrypted second public key using the first private key at the first station;
generating a shared key comprising corresponding to the first private/public key pair and the second private/public key pair at the first station;
decrypting the encrypted biometric information using the shared key at the first station;
authorising the user of the second station in dependence upon the decrypted biometric information; and,
if the user of the second station is authorized, commencing secure communication between the first station and the second station using the shared key for encryption/decryption.

For increased security, the first station transmits to the second station one of a biometric information source from which to gather the biometric information and a method of characterising the biometric information at the second station.

**Brief Description of the Drawings**

Exemplary embodiments of the invention will now be described in conjunction with the following drawings, in which:

Fig. 1 is an illustrated diagram of a computer network;
Fig. 2 is a simplified flow chart of a method for securely establishing a secure communication according to the invention using the computer network shown in Fig. 1; and,

Fig. 3 is a simplified flow chart of another method for securely establishing a secure communication according to the invention using the computer network shown in Fig. 1.

**Detailed Description of the Invention**

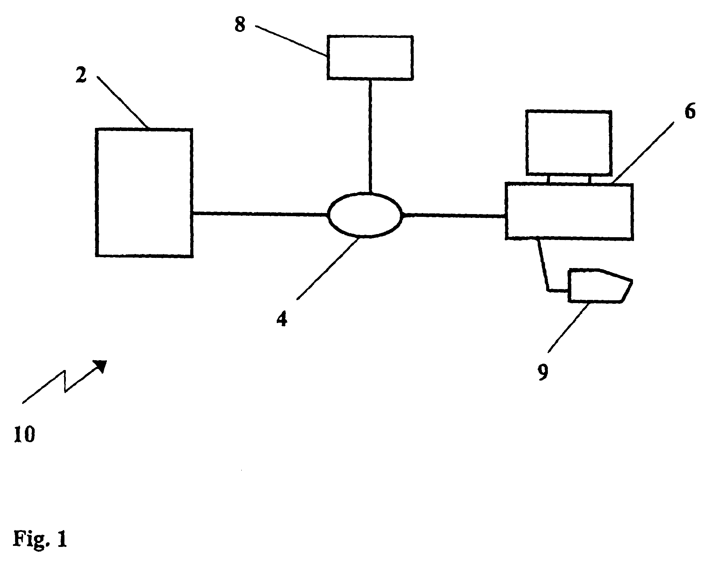

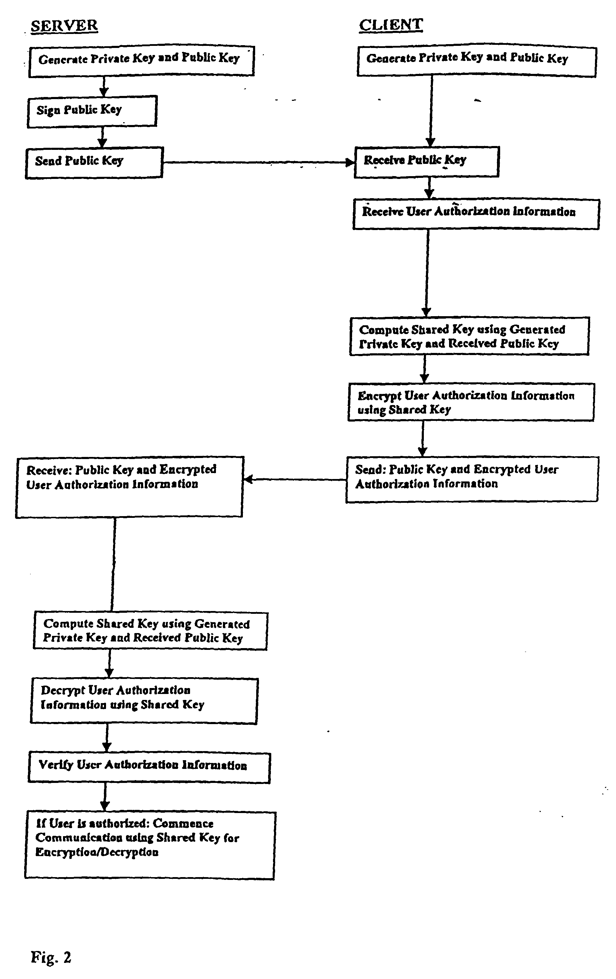

Referring to Figs. 1 and 2, a method for securely establishing a secure communication link between a first station - server **2** - and a second station - client **6** - is shown. The server **2** and the client **6** are connected via an unsecured communication network **4**. To provide sufficient security, encryption and cipher techniques are used for converting data into other corresponding data in a fashion that is reversible. Once encrypted, the data is unintelligible unless first decrypted. Anyone with a correct key can access information that has previously been encrypted using that key. A major problem of the symmetrical encryption or cipher techniques is an exchange of correct keys for encryption/decryption between the server **2** and the client **6** via the unsecured communication network **4** in order to establish a secure communication.

The method for securely establishing a secure communication link according to the invention is described using the Diffie-Hellman protocol for key agreement, but is not limited thereto. As is evident to a person of skill in the art, any key agreement protocol may be implemented.

The server **2** and the client **6** seek to generate a private key comprising random numbers $a$ and $b$, respectively. Public keys $g^a \bmod p$ and $g^b \bmod p$ are determined which relate to the private key. Each of the public keys is generated on a different system, the server **2** or the client **6**. Parameter $p$ is a prime number and parameter $g$ is an integer less than p, with the following property: for every number $n$ between 1 and $p$ - 1 there is a power $k$ of $g$ such that $g^k = n \bmod p$. The server **2** sends its public key $g^a \bmod p$ to the client **6**. A user of client **6** provides user authorization information. Upon receipt, the client **6** determines a shared secret key such as a DES key $z = z_a = (g^b \bmod p)^a \bmod p$ based on the received public key and the value of the private key $b$. The client then encrypts the user authorization information using the shared key. The encrypted user authorization information and the public key $g^b \bmod p$ are then transmitted to the server **2**. Upon receipt, the public key $g^b \bmod p$ of the client **6** and the value of $a$ are used to determine the shared secret key such as a DES key $z = z_a = (g^b \bmod p)^a \bmod p$. The encrypted user authorization information is then decrypted at the server **2** using the corresponding shared key. The decrypted user authorization information is then verified and if the user is an authorized user the communication session continues. Otherwise, the key is discarded and communication between the client **6** and the server **2** is terminated. The Diffie-Hellman key agreement protocol is based on the assumption that it is computationally infeasible to calculate the shared secret key given the two public keys when the prime number $p$ is sufficiently large. Preferably, the public key $g^a \bmod p$ transmitted from the server **2** to the client **6** is digitally signed using a trusted entity **8** or key escrow. Therefore, a secure communication link is securely established between the server **2** and the client **6** using the shared key $z$ for encryption/decryption, Signing the public key $g^a \bmod p$ transmitted from the server **2** to the client **6** and transmitting encrypted user authorization information successfully prevents any MIM attack without the need for large facilities for key storage and key management. Optionally, the public key $g^b \bmod p$ is encrypted at the client **6** using a public key of the server associated with a private key as a private-public key pair prior transmission from the client **6** to the server **2**. In a preferred embodiment the user authorisation information comprises biometric information such as fingerprint information in order to increase security.

The method according to the invention is highly advantageous as it obviates a need for certification of both exchanged public keys. Certification of all public keys is proposed in a prior art station-to-station modification of the Diffie-Hellman algorithm. For example, according to the invention, the server **2** belonging to a bank communicating with a large number of customers - clients **6**- generates one private/public key pair for communicating with all its clients **6**. Certification of only the one public key allows the bank to securely sign public keys associated with symmetric key exchange. Each client can verify with a known level of security the authenticity of the server's key. Further, using the method of the present invention allows the client to securely provide its public key information to the server absent certification, This obviates a need for a key server storing public keys of the server and all the clients.

Using the method according to the invention to securely establish a secure communication link, a MIM is not able to intercept a communication between the server **2** and the client **6**. Furthermore, due to use of user authorization information the MIM is also prevented from establishing a communication with the server **2** in place of the client **6**.

As is evident, the method according to the invention is not limited to key generation using the Diffie-Hellman algorithm or encryption using a DES algorithm as shown in Fig. 2 but allows for determination of symmetrical keys for use with any suitable encryption algorithm including future algorithms such as the advanced encryption standard (AES) given that a key exchange protocol similar to the Diffie-Hellman key exchange protocol exists for that standard. Implementation of the method according to the invention into these future encryption algorithms facilitates their use in growing sectors like e-commerce, home-banking, stock trade via the Internet, etc. by obviating the need for large key storage and key management facilities. The invention also increases substantially security by providing a method for securely establishing a secure communication via an unsecured communication network.

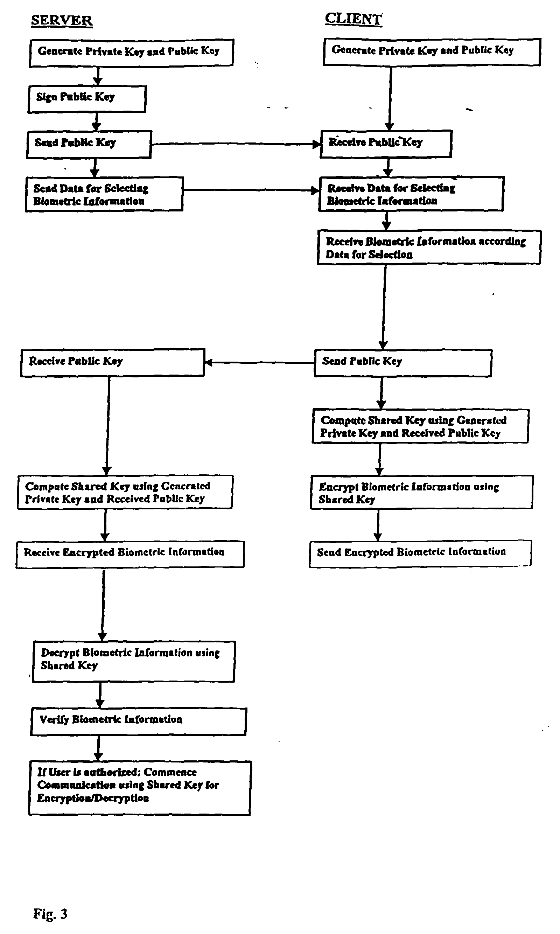

User authorization information that provides substantially more secure access and does not require a password or access code is biometric information. In a method according to the invention shown in Figs. 1 and 3, a biometric input device **9** such as a fingerprint scanner receives unique biometric information from a user. The received biometric information is then encrypted using a shared key comprising the public key received from the server **2** and the private key generated at the client **6** prior transmission to the server **2**. Upon receipt of the information from the client **6**, the symmetric key is derived and the biometric information is decrypted and matched against biometric information belonging to registered users. Optionally, a selection criterion is transmitted to the client **6** to select biometric information samples to be provided by a user of the client **6**. Further optionally, a plurality of different biometric information samples are used to identify a user. Of course, the biometric information is not limited to fingerprint but includes any kind of biometric information such as a retinal scan, voice recognition or facial recognition.

User authorisation based on passwords and biometric information is well known in the art of computer security. Any reliable method for performing user authorisation can be used with the present invention in order to secure a communication session between two stations communicating via a unsecured network.

Numerous other embodiments may be envisaged without departing from the spirit and scope of the invention.

**Claims**

1. A method for securely establishing a secure communication link between a first station and a second station of a communication network comprising the steps of:

    a) transmitting a first public key corresponding to a first private key from the first station to the second station via the communication network;
    b) receiving the first public key at the second station;
    c) receiving at the second station user authorization information from a user of the second station;
    d) determining a shared electronic key from the first public key and a second private key wherein the shared key is also capable of being determined from a second public key corresponding to the second private key and the first private key;
    e) encrypting the user authorisation information using the shared electronic key;
    f) transmitting the encrypted user authorisation information and the second public key from the second station to the first station via the communication network;
    g) receiving the encrypted user authorization information and the second public key at the first station;
    h) determining the shared electronic key from the second public key and the first private key;
    i) decrypting the user authorization information using the shared electronic;
    j) registering the user authorisation information against stored data relating to user authorisation to determine if the user of the second station is an authorised user; and,
    k) if the user of the second station is an authorised user, initiating a secure communication session between the first station and the second station using the shared electronic key for at least one of encryption and decryption.

2. A method for securely establishing a secure communication link between a first station and a second station of a communication network as defined in claim 1, wherein the first public key is derived from the first private key and wherein the second public key is derived from the second private key.

3. A method for securely establishing a secure communication link between a first station and a second station of a communication network as defined in claim 2, wherein the first private key is $a$, the first public key is derived using the equation $g^a$ mod $p$, and the shared electronic key is $z = z_a = (g^b \bmod p)^a \bmod p$, wherein parameter $p$ is a prime number arid parameter $g$ is an integer less than p, with the following property: for every number $n$ between 1 and $p - 1$ there is a power $k$ of $g$ such that $g^k = n \bmod p$.

4. A method for securely establishing a secure communication link between a first station and a second station of a communication network as defined in claim 3, wherein the second private key is $b$, the second public key is derived using the equation $g^b$ mod $p$, and the shared electronic key is $z = z_a = (g^b \bmod p)^a \bmod p$.

5. A method for securely establishing a secure communication link between a first station and a second station of a communication network as defined in claim 4, wherein the private and the public keys are generated in accordance with the Diffie-Hellman algorithm.

6. A method for securely establishing a secure communication link between a first station and a second station of a communication network as defined in claim 5, wherein the shared electronic key is a key for use in DES encryption.

7. A method for securely establishing a secure communication link between a first station and a second station of a communication network as defined in claim 1, wherein the user authorization information comprises biometric information.

8. A method for securely establishing a secure communication link between a first station and a second station of a communication network as defined in claim 7, wherein the step of comparing the decrypted user authorisation information with stored user authorisation data comprises the step of registering the biometric information of the user against stored templates.

9. A method for securely establishing a secure communication link between a first station and a second station of a communication network as defined in claim 7, wherein the biometric information comprises a fingerprint.

10. A method for securely establishing a secure communication link between a first station and a second station of a communication network as defined in claim 1, comprising the step of signing the first public key.

11. A method for securely establishing a secure communication link between a first station and a second station of a communication network as defined in claim 1, wherein the user authorization information comprises a password.

12. A method for securely establishing a secure communication link between a first station and a second station of a communication network comprising the steps of:

generating a first public key from a first private key at the first station;
signing the first public key with a private key of the first station;
transmitting the signed first public key from the first station to the second station via the communication network;
receiving the signed first public key at the second station;
verifying the signed first public key at the second station;
generating a second public key from a second private key at the second station;
generating a shared key corresponding to the first public key and the second private key at the second station;
receiving biometric information at the second station from a user of the second station;

encrypting the received biometric information using the shared key;
transmitting the encrypted biometric information and the second public key from the second station to the first station via the communication network;
receiving the encrypted biometric information and the second public key at the first station;
generating a shared key corresponding to the second public key and the first private pair at the first station;
decrypting the encrypted biometric information using the shared key at the first station;
authorising the user of the second station in dependence upon the decrypted biometric information to determine an authorisation result; and,
if the authorisation result is indicative of the user of the second station being authorized to access the first station, commencing a secure communication session between the first station and the second station using the shared key for at least one of encryption and decryption.

13. A method for securely establishing a secure communication link between a first station and a second station of a communication network as defined in claim 12, comprising the step of securing the second public key prior to transmitting it from the second station to the first station.

14. A method for securely establishing a secure communication link between a first station and a second station of a communication network as defined in claim 12, wherein the biometric information comprises fingerprint information.

15. A method for securely establishing a secure communication link between a first station and a second station of a communication network as defined in claim 14, comprising the step of transmitting data from the first station to the second station for selecting biometric information of a user of the second station.

16. A method for securely establishing a secure communication link between a first station and a second station of a communication network as defined in claim 12, wherein the step of authorising the user of the second station comprises the steps of: characterising the decrypted biometric information;

comparing the characterised decrypted biometric information against previously stored biometric information templates to provide a comparison result;
when the comparison result is within predetermined limits, determining an authorisation result indicative of the user being authorised to access the first system.

**17.** A method for securely establishing a secure communication link between a first station and a second station of a communication network as defined in claim 12, wherein the step of authorising the user of the second station comprises the steps of:

transmitting data from the first station to the second station for characterising biometric information of a user of the second station characterising the biometric information prior to encrypting the characterised biometric information;

comparing the decrypted characterised biometric information against previously stored biometric information templates to provide a comparison result;

when the comparison result is within predetermined limits, providing an authorisation result indictive of the user being authorised to access the first system.

Fig. 1

**SERVER**

**CLIENT**

| Generate Private Key and Public Key |

| Generate Private Key and Public Key |

| Sign Public Key |

| Send Public Key | → | Receive Public Key |

| Receive User Authorization Information |

| Compute Shared Key using Generated Private Key and Received Public Key |

| Encrypt User Authorization Information using Shared Key |

| Receive: Public Key and Encrypted User Authorization Information | ← | Send: Public Key and Encrypted User Authorization Information |

| Compute Shared Key using Generated Private Key and Received Public Key |

| Decrypt User Authorization Information using Shared Key |

| Verify User Authorization Information |

| If User is authorized: Commence Communication using Shared Key for Encryption/Decryption |

Fig. 2

9

**SERVER**

**CLIENT**

Fig. 3